# EUROPEAN PATENT SPECIFICATION

(11) **EP 0 798 972 B1**
(45) Date of publication and mention of the grant of the patent: **26.09.2001**
(21) Application number: 95912504.8
(22) Date of filing: 21.03.1995
(51) Int. Cl.: A23L 1/31

(54) **METHOD FOR PREPARING A COHERENT PIECE OF MEAT FROM SMALLER PIECES OF MEAT, AND THE COHERENT PIECE OF MEAT OBTAINED**
VERFAHREN ZUR HERSTELLUNG VON EINES KOHÄRENTEN FLEISCHSTÜCKS AUS KLEINEREN FLEISCHSTÜCKE UND ERHALTENES FLEISCHSTÜCK
PROCEDE DE RECONSTITUTION D'UN MORCEAU DE VIANDE RECONSTITUE A PARTIR DE MORCEAUX DE VIANDE PLUS PETITS, ET MORCEAU DE VIANDE RECONSTITUE AINSI OBTENU

(30) Priority: 21.03.1994 NL 9400442
(43) Date of publication of application: 08.10.1997
(73) Proprietor: Meester C.V., 8131 PM Wijhe (NL)
(72) Inventor: van Schouwenburg, Gerrit Antoni, 8101 CR RAALTE (NL)
(74) Representative: Prins, Adrianus Willem
(86) International application number: NL9500106
(87) International publication number: WO9525441

(56) References cited:
- EP-A- 0 289 862
- EP-A- 0 322 009
- WO-A-85/02520
- FR-A- 1 595 217
- GB-A- 2 198 921
- US-A- 3 740 235
- US-A- 3 890 451
- US-A- 4 399 164
- DATABASE WPI Week 8408, Derwent Publications Ltd., London, GB; AN 84-046072 & JP,A,59 006 863 (SUZUHIRO KAMABOKO K) 13 January 1984

## Description

The invention relates to a method for manufacturing a coherent piece of meat from smaller pieces of meat and to the obtained coherent piece of meat.

It is known that through massaging of meat with common salt and/or other (edible) salts a layer of solubilized proteins forms on the surface of the meat. Such a treatment can be performed for instance by massaging and tumbling salted pieces of meat for a time in a rotating drum. It is also known that pieces of meat processed in such a manner can be pressed against each other, for instance in a mould, whereby after a time there occurs a certain cohesion between the pieces of meat.

The adhesion obtained in this manner between the pieces of meat is however unsubstantial and the obtained composite piece of meat easily falls apart into the original pieces.

Nor does a piece of meat formed in this manner have cutting strength, that is, it cannot be cut without falling apart, or hardly so.

It is further known that a much more stable connection between pieces of meat can be obtained by heating the pieces of meat massaged with salt and then pressed together to a temperature of ± 65°C or higher in the core (the so-called boiling process). The solubilized proteins located at and on the surface of the meat are coagulated by this heating process whereby the pieces of meat are firmly joined to each other. Many cooked meat products are manufactured in this manner from comparatively small pieces of meat.

It is therefore possible with the known methods to form a raw piece of meat from smaller pieces of meat, which however falls apart easily and which in fact can only be sold in a form-retaining packaging such as a can or, in the case of smaller constituent parts, an intestinal casing.

Alternatively, it is possible with the known methods to manufacture a cooked composite piece of meat.

However, in a piece of meat thus obtained in the known methods by cooking or at least a heat treatment at relatively high temperature, not only are the proteins on the surface of the constituent pieces of meat coagulated but the non-solubilized proteins in the interior of the constituent pieces are also denatured. The thus obtained piece of meat has properties completely different from raw meat in terms of taste, bite etc.

The above described known methods do not provide the option of manufacturing from smaller pieces of meat a large, firmly coherent piece of meat, the constituent parts of which are still raw. This means that it is not possible with the known art to manufacture for instance a beef-steak formed from pieces. This has the result that pieces of meat which are per se of good quality but have small dimensions are treated as waste meat.

It is noted that a method is described in the European patent application 0201975 according to which composite raw pieces of meat can be prepared. According to this known method the pieces of meat for joining together are mixed with a protein solution acting as a sort of glue and containing fibrinogen and thrombin and preferably also catalytic amounts of transaminase and calcium ions. A drawback to this known method is that the formed mixture has to be held in a mould for a relatively long time, in the order of ± 10 hours. In addition, blood plasma with an increased fibrinogen concentration is used as protein solution, which is a great drawback.

The invention now has for its object to make available a method with which it is possible to manufacture composite raw pieces of meat without a protein solution., whether or not in the form of blood plasma, having to be added.

For this purpose according to one aspect of the invention a method is provided for manufacturing a coherent, robust piece of meat from smaller pieces of meat, wherein the smaller pieces of meat are treated with one or more edible salts in order to form a layer with solubilized proteins on the surface of the smaller pieces of meat and wherein the pieces of meat are held against each other to form the coherent piece of meat, said method being characterized in that the solubilized proteins on the surfaces of the smaller pieces of meat are selectively denatured by causing a pH decrease in between the smaller pieces of meat and coagulated, whereby the smaller pieces of meat are mutually joined and attached to each other by said coagulated proteins but substantially retain the properties of unprocessed raw meat because proteins present in the smaller pieces of meat substantially are not denatured.

In accordance with a further aspect of the invention a method for manufacturing a coherent robust piece of raw meat from smaller pieces of raw meat, wherein the smaller pieces of meat are treated with one or more edible salts in order to form a layer with solubilized proteins on the surfaces of the smaller pieces of meat and wherein the pieces of meat are held against each other to form the coherent piece of meat, wherein the solubilized proteins on the surfaces of the smaller pieces of meat are selectively denatured and coagulated, by means of a heat treatment is characterized in that the heat treatment includes a temperature increase and a subsequent temperature decrease which in a temperature range above 40°C is effected at a rate of at least 0.1°C/sec., whereby the smaller pieces of meat are mutually joined and attached to each other by said coagulated proteins but substantially retain the properties of unprocessed raw meat because proteins present in the smaller pieces of meat substantially are not denatured.

The invention is therefore based on the insight that it is possible selectively to partly denature and coagulate solubilized proteins located on the surfaces of the relatively small pieces of meat without the proteins in the interior of the pieces or portions of meat themselves being denatured. The invention will be further elucidated hereinbelow.

In denaturation of proteins the proteins unfold and a stable network can be formed between the proteins, so-called coagulation. During unfolding of the proteins in a watery environment the structure of the proteins changes, S = S bridges are broken and the apolar amino acid groups come to be exposed. In the coagulation phase a network is formed which is stabilized by electrostatic forces and hydrophobic interactions, wherein in the final stage new intermolecular covalent S = S compounds can also be formed.

The denaturation of proteins is an endothermic process, so that energy must be supplied. During coagulation energy is once again released. The temperature at which denaturation begins and the energy required for denaturation are different for each type of protein. In addition, the speed of the denaturation process is temperature-dependent. By treating meat with salt(s) a part of the proteins solubilizes. Denaturation for solubilized proteins is a similar process which takes place as described above. It is however the case that the proteins treated with salt are more stable due to the double layer and that more energy and/or a higher temperature is needed to achieve denaturation. The electrical charge of protein molecules is also greatly influenced by the pH. The electrostatic bonds are charge-dependent and are therefore affected to a large extent by the pH, and this can influence the coagulation process and thus the form and strength of the network.

The processes which are of importance for the present invention involve selective denaturation, and a selective denaturation which can be accurately controlled. The term selective denaturation comprises a selection in accordance to place (between the meat parts in and on the surfaces of the meat parts) and/or a protein-selective denaturation. The objective here is to mutually join pieces of meat such that "one piece" of meat is once again created, while the raw character of the meat is wholly retained. This is possible if coagulation takes place selectively on and/or close to the interfaces and the pieces of meat themselves are not denatured. The result is then a product which retains all the characteristics of raw meat but in which (partial) coagulation has taken place on the interface between the parts, wherein bonds between proteins have been created which are strong enough to firmly bind together the meat parts.

To this end it is necessary in the first instance that situated on the surface of the meat parts are sufficient quantities of proteins which, after denaturation, can form a network of the desired strength. This can be achieved by massaging or tumbling the meat with salt (common salt and/or other edible alkali metal salts), whereby a part of the proteins can solubilize and extrudate, while the proteins on the surface of the meat parts are also "activated".

A selective denaturation of the solubilized proteins on the surface of the meat parts can now be achieved in different ways.

This can be done in the first place by causing the conditions necessary to bring about denaturation to occur only locally, i.e. on the interface, and then to form a coagulate. This can be realized for instance by creating a pH decrease specifically on the interface between the meat parts with the layer of solubilized proteins. This pH decrease changes the electrostatic charge of the protein molecules and thereby initiates the coagulation process, wherein electrostatic bonds occur first and subsequently hydrophobic and finally covalent bonds can also be formed. This process progresses relatively slowly and takes several hours.

The bonding between meat parts obtained in this manner is of another character than the known acid-gel formation as known for instance from dry sausage preparation. This known acid-gel formation takes place at around or below the isoelectrical point and is a network formation of proteins which in the first instance is reversible, resulting in very weak bonds between the meat parts. The thus obtained cohesion is sufficient for a finely reduced product such as a dry sausage but is inadequate for larger meat pieces. The firmer join between the meat parts obtained according to the invention are comparable to the joins resulting from heat denaturation. The joins between the meat parts resulting from acid denaturation occur when locally the pH decreases very considerably, much lower than is the case in an acid-gel formation. The pH can for instance decrease 0.5 to 3, preferably 0.75 to 3, more preferably 1 to 2 pH points.

In a practical embodiment of the method according to the invention smaller pieces of meat can be massaged for a time for instance in a rotating drum with salt and water. A layer of extrudated, solubilized meat proteins thereby forms on the outside of the meat parts. An additive causing delayed acidification (GDL [gluconodeltalacton] or an encapsulated edible acid such as citric acid, lactic acid, tartaric acid etc.; a fat capsule or a sugar capsule can be used as capsule) is then distributed homogeneously through this layer and the meat parts placed in a mould or container and held under light pressure. The protein layer denatures and within several hours, depending on the chosen form of delay, a firm adhesive layer forms between the pieces of meat. It is important that the pH decrease occurs only locally, that is, in the layer of solubilized proteins and optionally on the surface of the pieces of meat but not in the interior of the pieces of meat. The amount of acid released both in absolute sense and per unit of time must be such that the pH in the boundary layer decreases rapidly to a pH of 1 to 2. The acid then diffuses from the boundary layer and spreads through the meat mass. By correctly selecting the amount of acid and the delaying mechanism a considerable decrease in the pH on the interface can be temporarily achieved, while after the balance has been restored the total pH decrease is small, so that the other proteins do not denature and the taste is not affected either.

The desired selective denaturation can also be realized in other ways. Any chemical substance which in a determined concentration brings about denaturation can in fact be used for this purpose.

A second possibility of bringing about selective denaturation is to give the pieces of meat a heat treatment after the massaging or tumbling with salt(s), so that only (determined) proteins located between the pieces of meat and on the surface thereof denature, this in a manner such that a sufficiently strong network is created to bind together the pieces but that the proteins defining the raw character of the meat do not denature, or hardly so.

In order to realize this use can be made of the fact that (a) different fractions of proteins coagulate at different temperatures, (b) there is a temperature/time relation for the denaturation/coagulation reaction, (c) due to the treatment with salt and the thereby resulting double layer, particular proteins have obtained a greater stability change relative to heat denaturation than other proteins, and (d) the proteins enclosed in a particular structure, such as a muscle structure, are less temperature-sensitive than the (solubilized) proteins which are released by the massage with salt and which have extrudated onto the surface. All this enables choosing of a heat treatment such that at least a part of the solubilized proteins between the pieces of meat forms into a network which binds together the pieces of meat, while the remaining proteins do not denature, or hardly at all, due to this heat treatment and the raw character of the meat is retained.

Muscle protein denatures in a number of mutually distinguishable and measurable phases. The reason for this lies in the fact that "meat protein" is in fact a mixture of different proteins. The most important of these are myosin and actin; the greater part of the muscle protein consists of these proteins. These proteins are responsible for the structure and functioning of the contracting part of a muscle. In addition to these proteins there are also the sarcoplasmic proteins and the connective tissue protein (collagen).

Finally, there are also various water-soluble proteins occurring in very small quantities, including for instance myoglobin which is responsible for the colour of meat.

When for instance a determined amount of heat is now applied to the above mixture of muscle proteins, it is possible with the DSC (Differential Scanning Calorimetry) technique to identify that the core of the denaturation curve of respectively myosin, sarcoplasmic protein and actin lie at roughly 50, 63 and 80°C. Denaturation also takes place at lower temperatures but at a speed which decreases sharply as the temperature falls.

The behaviour of the above proteins, thus the location of the coagulation curve on the temperature scale and the height of the temperature at which coagulation begins, is further influenced by the pH and by the electrostatic charge resulting from added salts.

In order to now obtain the desired selective denaturation, a determined temperature range which is dependent on the pH, the electrostatic stability and the structure of the material must be passed through in a defined time. The maximum temperature which may be reached in order not to lose the raw character is about 60°C, a temperature at which the myofibrillar proteins denature. Denaturation already begins however at a temperature from 40°C, albeit very slowly. As the temperature rises it becomes increasingly more rapid. It is therefore important to pass through the higher part of the temperature range quickly and to cool quickly again to below a temperature at which the denaturation processes begin.

It can be seen from the foregoing that the said temperature of 60°C is not an absolute upper limit. As long as the supplied heat is absorbed substantially by the solubilized proteins on the surfaces of the pieces of meat the meat parts themselves are not affected, or hardly so.

The treatment temperature can vary depending inter alia on the amount of solubilized proteins, the duration of the temperature treatment and the total quantity of meat for processing. Temperatures up to 90°C are herein possible.

As already noted, the heating process must be of short duration. The precise duration depends on a number of factors such as the amount of solubilized proteins, the pH and the electrostatic stability, the structure in which the proteins are incorporated, the total quantity of meat for processing, the thickness of the piece of meat for heating, the maximum temperature, the heat capacity of the container in which the meat is situated etc. An optimal combination of treatment duration and the mentioned, and possibly unmentioned, factors can in practice be determined experimentally in relatively simple manner.

It is desirable that at least the heating can proceed rapidly in a temperature range between a comparatively low temperature in the order of 35-45°C, for instance 40°C, and the maximum temperature, for instance 65-70°C. The same applies with regard to cooling after the temperature treatment.

It is noted that the heating methods wherein heat is generated into the material by high-frequency waves do not appear to be usable. Due to a varying fat, water and salt content in the material a sufficiently uniform heating cannot usually be obtained. A very strong heating can sometimes also occur locally (hot spots), whereby the raw character of the meat is lost there.

It is noted that when heat sources are used which act on the meat mass from outside, such as for instance heated plates placed on either side of the meat mass, account must be taken of the fact that the outside of the meat mass reaches the desired temperature sooner than the core of the meat mass. During the heating the outer layer receives more heat energy than the layers of the meat mass located more to the inside. On the other hand, the layers of the meat mass located more to the inside remain warm longer after ending of the heating process. What is important is that the total heat energy supplied to the meat parts is not so great that the raw character of the meat, and particularly the outer layers of the meat mass, is lost. The correct heating method can be determined experimentally from case to case.

Cooling can take place in forced manner using one of the techniques known for this purpose. The use can be envisaged here of a (salt) water bath or a cooling tunnel. Cooling can also take place with liquid nitrogen or CO2.

In order to achieve good results it is recommended that the average temperature increase amounts to 0.1-50°C/sec or more in the critical range of about 40°C to about 60°C, wherein the most homogeneous possible temperature through the product is desirable. The minimum requirement herein is 0.1°C/sec in the upward range from 40°C to the maximum temperature and the downward range back to 40°C. At a maximum temperature of 65°C the heating time amounts to a maximum of 500 sec. The temperature reached and the progress through the temperature range determine, subject to factors such as the raw material, double layer, pressure and pH, the extent of selective denaturation and the strength of the obtained network. The consequence of the precisely defined heating range is that the option is provided of only denaturing and causing to coagulate for instance the fraction which denatures first, the protein myosin. The coagulate will moreover only form on the interfaces and in the interspace between the separate meat parts; the structure of the proteins which are still located in the natural join in the pieces of muscle tissue and which are more stable will remain virtually unaffected. Proteins coagulating at the higher temperatures will not be affected either. Since these are mainly responsible for the change in the appearance of meat as a result of heat treatment, the appearance will be that of a raw product despite the cohesion formed in the meat mass.

The protective influence of the double layer round the proteins treated with salt is of particular importance in this case. This enables a much more intensive heat treatment to be given than would otherwise be possible. A product not treated with salt would be further denatured even with a short heat treatment at for instance 50-60°C and be incapable, or hardly capable, of forming a network between the meat parts, and the raw character would be largely or wholly lost.

A factor which in addition to the heat treatment plays an important part in respect of the strength of the network formed is the pH of the meat. The strength of the network can be influenced by varying the pH. The pH of the meat mass can advantageously be adjusted to a predetermined value prior to the heat treatment.

The pH has a strong influence on the electrostatic charge of proteins, so that the double layer protection is affected. Account must however be taken of the fact that at the same time the stability of the other proteins also changes and in many cases the heat treatment will have to be adapted when the pH of the meat changes.

Thus for instance at a pH of 5.9 a robust network between the meat parts can be formed in a product with a given heat treatment without the product losing its raw character, while at a pH of 5.5 and an identical heat treatment this same product forms a much less robust network, wherein the pieces of meat also denature and many of the raw characteristics are lost.

If in the second method of selective denaturation (thus by means of applied heat) small pieces of meat or finely reduced meat is used as basic material and the product is spread out in a layer and held under light pressure, by then manipulating the denaturation process by means of heat a texture can be given to this meat which approximates the texture of red meat. If the denaturation process is continued by holding the product for a longer period at a higher temperature such that extensive denaturation of proteins takes place, a product then results with the same texture as that of boiled red meat which does not look like fried mincemeat or hamburger as might be expected. The thickness of the product must however be chosen to correspond with the created texture. Slices of ham, roast beef and the like can be made in this manner.

Pieces of meat of any size can be joined together in this manner. Meat greatly reduced in size can also be added. The desired end product and the appearance of the product determine to a significant extent the choice of the type of meat used and the size of the pieces. Use of smaller pieces can result in a varied patterning, which may be visually less attractive but which is not a problem for instance in products sold in breadcrumbed form such as schnitzels.

Of importance in selective denaturation is the adhesive layer of solubilized proteins on the surface of the meat parts or portions. As already stated, this layer can be obtained by tumbling or mixing the meat with salt(s). It is also possible however to shorten or even completely avoid the tumbling process by adding a small quantity of forcemeat (lean meat with salt and water, greatly reduced in size) which can at least partially assume the part of adhesive layer.

It is also possible to form from smaller pieces pieces of meat forming a properly coherent raw product by adding to the small pieces a forcemeat made from finely reduced lean meat, water and salt(s). Such a forcemeat contains released solubilized proteins. In addition to salt(s) and optionally phosphate, other substances such as flavourings and aromatics, preservatives and the like can also be added to the forcemeat. In addition, the proteins of the pieces of meat can be slightly solubilized as described above using salt(s). This can take place after mixing with the forcemeat as a result of the salt(s) in the forcemeat or separate additive salt(s). A mixture of the pieces of meat with for instance 10% forcemeat can then be formed and subjected to a heat treatment of the type described above in order to obtain a coherent but still raw piece of meat by denaturation and coagulation of the solubilized proteins from both the pieces of meat and the forcemeat.

The pieces of meat can be pre-treated with salt and the salt may also have intruded slightly, but an intensive treatment by for instance tumbling is only necessary for a short time or not at all when the said forcemeat is used. The coagulated proteins may come from the pieces of meat and from the forcemeat, but also come substantially only from the forcemeat.

After the above described selective denaturation/ coagulation process the raw product is ready for further processing.

A meat product obtained according to any of the methods described in the foregoing can be treated in the same manner as a "normal", non-composite, raw piece of meat, for example cut, boiled, fried etc. The method according to the invention has been found during tests to be particularly suitable for preparing all types of raw meat products.

### Example 1: pork steaks

The raw material, lean pork, is cut by a pre-cutter into pieces of fist size and a weight of 100-200 g. The chunks of meat are tumbled under vacuum in a tumbler with 2% common salt, 0.05% sodium ascorbate, 0.1% polyphosphate and 3% ice. After 12 hours of tumbling 1.5% of encapsulated GDL is added. The capsule of GDL is fat and melts at a temperature above 60°C. The GDL content is 70%. Tumbling is subsequently continued for several more minutes until the GDL is well distributed through the meat mass. The meat mass now consists of chunks of meat lying in a slimy layer of solubilized extrudated protein. The pH in the slime layer must lie above 5.7. This mass is filled into vacuum bags and vacuum-sealed. The vacuum-sealed meat is then laid in the bag into a mould in which it assumes a determined shape and the material in the mould is placed under refrigeration (0-2°C). A maximum of 60 minutes is allowed between the addition of GDL and placing in the mould. The watery environment leaks the GDL out of the fat capsule and provides a dosaged local acidification. The type of capsule must be adapted to the desired pH decrease per unit of time. After 24-72 hours the meat mass, now joined together and become stiff, is taken out of the bag and cut into slices of the desired thickness on a cutting machine. The slices can be sold fresh or deep-frozen. The final pH of the meat slices has decreased to a pH of 5.5- 5.6 from a starting pH of 5.75.

### Example 2: Schnitzel

Shoulders without bone, fat and rind and with the heel removed, are reduced in size in a mincing machine. This must take place such that the meat is not cut but pulled apart; without however making a pasty mass of the meat. The purpose hereof is to make the surface area of each piece of meat as large as possible so that maximum adhesion to other pieces of meat is possible. The pieces of meat have an average cross section of 20 mm and weigh 10-40 g. After size reduction the meat is mixed in a mixer for 3-4 minutes with 0.8-1.2% salt. Approximately 150 grams of the meat mixed with salt is portioned by a hamburger portioning machine onto a conveyor belt moving forward in stepwise manner. The belt runs over a heated plate which can heat the belt and the meat lying thereon. Situated above this heated plate is a likewise heated plate which moves downward after each step of the belt and herein compresses the meat to the desired thickness. The meat is now heated between the plate and the belt. At a temperature of the plates of 50°C a heating time of 1.5 to 3 minutes is sufficient to obtain a properly coherent but completely raw product. After heating, the product runs through a bath with a battering liquid and is then coated with breadcrumbs.

### Example 3: Pork blocks

A mixture of pork consisting of for instance shoulders, bellies, cuttings and fat is devilled a number of times by a pre-cutting plate such that a homogeneous mass results with pieces of meat of around 30-50 g. It is important here that during size reduction the pieces of meat tear apart slightly so that the pieces acquire an irregular shape and a large adhesion surface.

The meat is mixed intensively for 15 minutes with 2% nitrite salt, 0.5% ascorbate and 2% common salt such that a stiff meat dough is created. This must then rest for 24 hours so that the additives and the salt have the opportunity to spread evenly through the individual pieces of meat. Thereafter the dough is mixed again, under vacuum, after addition of further seasonings, reducing sugars, GDL and other additives necessary for a good colour forming and storage life.

The dough mass is now processed on a machine as described in the European patent application no. 90.201741.7, wherein on a conveyor belt it is extruded into a continuous slice with a thickness of about 1 cm. After being enclosed by a second conveyor belt the meat mass is heated under light pressure in 3 minutes to a temperature of 50°C. Smoke aroma is atomized onto the upper side of the now joined meat slice, whereafter the slice is frozen in a nitrogen tunnel to -6°C in 4 minutes. The lightly frozen continuous strip of meat is then cut into bars which, after 10 minutes of tempering are diced into blocks of 1x1x1 cm in for instance an Urschel cutting machine.

### Example 4: Ham blocks

Lean pork consisting of shoulder or ham meat is reduced in size and mixed as described in example 3, wherein the total salt addition is limited to 1.5 nitrite salt. After even distribution of the additives through the meat mass this is processed in similar manner, wherein special attention must however be paid that there are no air bubbles in the dough mass. At a thickness of 0.5 cm the product is gradually heated in phases between the belts in 8 minutes to a core temperature of 75°C. After the heating the continuous meat slice is pre-cooled by sprinkling with cold water. It is then further cooled in a nitrogen tunnel to between -2°C and +10°C. After being cut into bars to enable further processing the meat is cut into blocks or strips.

### Example 6: Bacon

Lean pork is devilled by a 19 mm plate. Salt (4.5%), nitrite (150 ppm), ascorbate (0.05%) and a mixture of 50% encapsulated GDL and encapsulated lactic acid/lactate (1.5%) are mixed intensively through the meat.

Ham piece fat with attached meat is intensively tumbled together with 10-20% lean meat, 2% salt, 5% water for 1-1.5 hours, whereafter it is devilled by a 13 mm plate. After addition of 1.5% nitrite salt, 0.05% ascorbate and 1% encapsulated GDL/lactic acid mixture it is mixed for a further 10 minutes. The meat and fat are now extruded in layers into slices of 20x50 cm such that a layered product results with meat layers of 1.5 cm and fat layers of 0.6-1.0 cm thickness. The bottom and top layers are meat.

This product is set aside in cooled state in a bag, under vacuum, for 48 hours. During this time the GDL and the lactic acid will leak out of the capsule and strongly acidify the surface of the meat portions such that a robust network is created which joins together the meat portions. A network is also formed in the fatty mass between the meat proteins which were added as lean meat and which due to the mixing with salt have formed a coating of solubilized proteins on the surface of the fat pieces. This network also continues onto the contact surface between meat and fat so that the layers are firmly joined to each other.

After freezing, the product can then be cut to strips, blocks or slices.

The extrusion method can also be adapted such that a layered product results corresponding with the typical pattern of a pig belly.

## Claims

1. Method for manufacturing a coherent robust piece of raw meat from smaller pieces of raw meat, wherein the smaller pieces of meat are treated with one or more edible salts in order to form a layer with solubilized proteins on the surfaces of the smaller pieces of meat and wherein the pieces of meat are held against each other to form the coherent piece of meat, **characterized in that** the solubilized proteins on the surfaces of the smaller pieces of meat are selectively denatured by causing a pH decrease in between the smaller pieces of meat and coagulated, whereby the smaller pieces of meat are mutually joined and attached to each other by said coagulated proteins but substantially retain the properties of unprocessed raw meat because proteins present in the smaller pieces of meat substantially are not denatured.

2. Method as claimed in claim 1, **characterized in that** at least on the interface between the smaller pieces of meat and the layer with solubilized proteins in a temporary pH decrease is brought about of 0.5 to 3, preferably 0.75 to 3, more preferably 1 to 2.

3. Method as claimed in claim 1 or 2, **characterized in that** the pH decrease is obtained by adding an additive causing a delayed acidification in a quantity such that the pH value decreases considerably in the layer with solubilized proteins, while the resulting final pH decrease in the pieces and/or portions of meat is insufficient to affect the taste.

4. Method for manufacturing a coherent robust piece of raw meat from smaller pieces of raw meat, wherein the smaller pieces of meat are treated with one or more edible salts in order to form a layer with solubilized proteins on the surfaces of the smaller pieces of meat and wherein the pieces of meat are held against each other to form the coherent piece of meat, wherein the solubilized proteins on the surfaces of the smaller pieces of meat are selectively denatured and coagulated, by means of a heat treatment, **characterized in that** the heat treatment includes a temperature increase and a subsequent temperature decrease of the pieces of meat which in a temperature range above 40°C is effected at a rate of at least 0.1°C/sec., whereby the smaller pieces of meat are mutually joined and attached to each other by said coagulated proteins but substantially retain the properties of unprocessed raw meat because proteins present in the smaller pieces of meat substantially are not denatured.

5. Method as claimed in claim 4, **characterized in that** the denaturation is brought about by means of a heat treatment at a temperature lying between 40°C and 95°C, preferably between 45°C and 75°C and more preferably between 50°C and 65°C.

6. Method as claimed in claim 4 or 5, **characterized in that** the temperature increase for the purpose of denaturation during the heat treatment amounts to 0.1 to 50°C/sec. for the applicable upward and downward temperature range.

7. Method as claimed in any of the foregoing claims, **characterized in that** the solubilized proteins are formed on the surface of the smaller pieces of meat by treating them with one or more suitable salts by massaging and/or tumbling.

8. Method as claimed in claim 9, **characterized in that** the treatment of the smaller pieces of meat with one or more suitable salts takes place in a rotating drum.

9. Method as claimed in any of the foregoing claims, **characterized in that** the solubilized proteins are at least partially formed by preparing a forcemeat from finely reduced meat with water and one or more suitable salts which is mixed with the smaller pieces of meat.

10. Method as claimed in claim 9, **characterized in that** the smaller pieces of meat are slightly salted prior to addition of the forcemeat.

11. Method as claimed in claim 9, **characterized in that** the relatively smaller pieces of meat are massaged with one or more suitable salts prior to addition of the forcemeat.

12. Method as claimed in any of the foregoing claims, **characterized in that** common salt is used for solubilizing proteins.

13. Method as claimed in any of the claims 5-12, **characterized in that** after the heat treatment a forced cooling is applied until the meat has reached a temperature lower than about 45°C.

14. Method as claimed in any of the foregoing claims, **characterized in that** the meat is held in a mould or container at least during the selective denaturation and the coagulation.

15. Method as claimed in claim 14, **characterized in that** the meat is held under pressure in a mould or container.

16. Method as claimed in claim 14 or 15, **characterized in that** the meat is arranged in a vacuum bag which is placed in the mould or container.

17. Method as claimed in any of the foregoing claims, **characterized in that** meat reduced in size is used as starting material and the denaturation and coagulation process is performed while the meat is held in a thin layer under light pressure to form a product with the texture of thinly cut red meat.

## Patentansprüche

1. Verfahren zur Herstellung eines kohärenten robusten Stücks rohen Fleischs aus kleineren Teilen rohen Fleischs, bei dem die kleineren Teile Fleisch mit einem oder mehreren Speisesalzen behandelt sind, um eine Schicht mit löslich gemachten Proteinen auf den Oberflächen der kleineren Fleischteile zu bilden, und bei dem die Fleischteile zusammengehalten werden, um das kohärente Fleischstück zu bilden, **dadurch gekennzeichnet, daß** die löslich gemachten Proteine auf den Oberflächen der kleineren Fleischteile durch eine Verringerung des pH-Werts zwischen den kleineren Fleischteilen selektiv denaturiert und koaguliert werden, wodurch die kleineren Fleischteile durch die koagulierten Proteine miteinander verbunden und aneinander angebracht werden, jedoch im wesentlichen die Eigenschaften unverarbeiteten rohen Fleisches beibehalten, da in den kleineren Fleischteilen vorhandene Proteine nicht denaturiert werden.

2. Verfahren nach Anspruch 1, **dadurch gekennzeichnet, daß** wenigstens an der Grenzfläche zwischen den kleineren Fleischteilen und den Schichten mit löslich gemachten Proteinen bei einer temporären Senkung des pH-Werts auf ungefähr 0,5 bis 3, vorzugsweise 0,75 bis 3, höchst vorzugsweise 1 bis 2, gebracht wird.

3. Verfahren nach Anspruch 1 oder 2, **dadurch gekennzeichnet, daß** die Senkung des pH-Werts durch Hinzufügen eines eine verzögerte Säuerung bewirkenden Zusatzmittels in einer Menge erreicht wird, die eine erhebliche Senkung des pH-Werts in der Schicht mit den löslich gemachten Proteinen bewirkt, während die sich ergebende letzte Senkung des pH-Werts in den Teilen und/oder Bereichen des Fleischs nicht für eine Beeinträchtigung des Geschmacks ausreicht.

4. Verfahren zur Herstellung eines kohärenten robusten Stücks rohen Fleischs aus kleineren Teilen rohen Fleischs, bei dem die kleineren Teile Fleisch mit einem oder mehreren Speisesalzen behandelt sind, um eine Schicht mit löslich gemachten Proteinen auf den Oberflächen der kleineren Fleischteile zu bilden, und bei dem die Fleischteile zusammengehalten werden, um das kohärente Fleischstück zu bilden, wobei die löslich gemachten Proteine auf den Oberflächen der kleineren Fleischteile durch Wärmebehandlung selektiv denaturiert und koaguliert werden, **dadurch gekennzeichnet, daß** die Wärmebehandlung eine Temperaturerhöhung und eine nachfolgende Temperatursenkung der Fleischteile umfaßt, die in einem Temperaturbereich über 40° mit einer Rate von wenigstens 0,1°C/sek, erfolgt, wodurch die kleineren Fleischteile durch die koagulierten Proteine miteinander verbunden und aneinander angebracht werden, jedoch im wesentlichen die Eigenschaften unverarbeiteten rohen Fleisches belbehalten, da in den kleineren Fleischteilen vorhandene Proteine nicht denaturiert werden.

5. Verfahren nach Anspruch 4, **dadurch gekennzeichnet, daß** die Denaturierung durch eine Wärmebehandlung bei einer Temperatur zwischen 40°C und 95°C, vorzugsweise zwischen 45°C und 75°C und höchst vorzugsweise zwischen 50°C und 65°C, erfolgt.

6. Verfahren nach Anspruch 4 oder 5, **dadurch gekennzeichnet, daß** die Temperaturerhöhung zum Denaturieren während der Wärmebehandlung zwischen 0,1 bis 50°/sek. für den anwendbaren Temperaturstelgerungs- und -senkungsbereich liegt.

7. Verfahren nach einem der vorhergehenden Ansprüche, **dadurch gekennzeichnet, daß** die löslich gemachten Proteine auf der Oberfläche der kleineren Fleischteile durch Behandeln derselben mit einem oder mehreren Speisesalzen durch Einmassieren und/oder Mischen gebildet werden.

8. Verfahren nach Anspruch 7, **dadurch gekennzeichnet, daß** die Behandlung der kleineren Fleischstücke mit einem oder mehreren geeigneten Salzen in einer Drehtrommel erfolgt.

9. Verfahren nach einem der vorhergehenden Ansprüche, dadurch gekennzelchnet, daß die löslich gemachten Proteine wenigstens teilweise durch Herstellen eines gehackten Füllfleischs gebildet werden, das aus fein zerkleinertem Fleisch mit Wasser und einem oder mehreren geeigneten Salzen hergestellt und mit den kleineren Fleischteilen vermischt wird.

10. Verfahren nach Anspruch 9, **dadurch gekennzeichnet, daß** die kleineren Flelschteile vordem Hinzufügen des Füllfleischs leicht gesalzen werden.

11. Verfahren nach Anspruch 9, **dadurch gekennzeichnet, daß** die relativ kleineren Fleischteile vor dem Zusetzen des Füllfleischs mit einem oder mehreren geeigneten Salzen eingerleben werden.

12. Verfahren nach einem der vorhergehenden Ansprüche, **dadurch gekennzeichnet, daß** Tafelsalz zum Löslichmachen der Proteine verwendet wird.

13. Verfahren nach einem der Ansprüche 5-12, **dadurch gekennzeichnet, daß** nach der Wärmebehandlung eine Zwangskühlung erfolgt, bis das Fleisch eine Temperatur unter ungefähr 45°C erreicht hat.

14. Verfahren nach einem der vorhergehenden Ansprüche, **dadurch gekennzeichnet, daß** das Fleisch wenigstens während der selektiven Denaturierung und der Koagulation in einer Form oder einem Behälter aufgenommen ist.

15. Verfahren nach Anspruch 14, **dadurch gekennzeichnet, daß** das Fleisch unter Druck in einer Form oder einem Behälter aufgenommen ist.

16. Verfahren nach Anspruch 14 oder 15, **dadurch gekennzeichnet, daß** das Fleisch in einer Vakuumtäsche angeordnet wird, die in die Form oder den Behälter verbracht wird.

17. Verfahren nach einem der vorhergehenden Ansprüche, **dadurch gekennzeichnet, daß** zerkleinertes Fleisch als Ausgangsmaterial verwendet wird und der Denaturierungs- und Koagulationsvorgang durchgeführt wird, während das Fleisch in einer dünnen Schicht unter geringem Druck gehalten wird, um ein Produkt mit der Textur von dünn geschnittenem rotem Fleisch zu erzeugen.

## Revendications

1. Procédé de fabrication d'une pièce ferme et cohérente de viande crue à partir de petits morceaux de viande crue, dans lequel-on traite les petits morceaux de viande avec un ou plusieurs sels comestibles pour qu'il se forme, à la surface de ces petits morceaux de viande, une couche contenant des protéines solubilisées, et dans lequel on maintient ces morceaux de viande les uns contre les autres afin d'en faire une pièce cohérente de viande, **caractérisé en ce que**, en provoquant une baisse du pH dans les interstices situés entre les petits morceaux de viande, on dénature sélectivement les protéines solubilisées présentes à la surface des petits morceaux de viande et on les fait coaguler, grâce à quoi les petits morceaux de viande sont assemblés et liés les uns aux autres par lesdites protéines coagulées, mais conservent dans une grande mesure les propriétés de la viande crue non traitée parce que les protéines présentes au sein des petits morceaux de viande ne sont pratiquement pas dénaturées.

2. Procédé conforme à la revendication 1, **caractérisé en ce que**, au moins aux interfaces entre les petits morceaux de viande et dans la couche contenant des protéines solubilisées, on fait temporairement baisser le pH de 0,5 à 3 unités de pH, de préférence de 0,75 à 3 unités de pH, et mieux encore de 1 à 2 unités de pH.

3. Procédé conforme à la revendication 1 ou 2, **caractérisé en ce que** l'on fait baisser le pH en ajoutant un adjuvant qui provoque une acidification retardée, en une quantité telle que le pH baisse considérablement dans la couche contenant des protéines solubilisées, alors que la diminution finale du pH qui en résulte dans les morceaux et/ou les portions de viande est insuffisante pour en altérer le goût.

4. Procédé de fabrication d'une pièce ferme et cohérente de viande crue à partir de petits morceaux de viande crue, dans lequel on traite les petits morceaux de viande avec un ou plusieurs sels comestibles pour qu'il se forme, à la surface de ces petits morceaux de viande, une couche contenant des protéines solubilisées, dans lequel on maintient ces morceaux de viande les uns contre les autres afin d'en faire une pièce cohérente de viande, et dans lequel on dénature sélectivement, par traitement thermique, les protéines solubilisées présentes à la surface des petits morceaux de viande et on les fait coaguler, **caractérisé en ce que** ledit traitement thermique consiste à faire monter la température des morceaux de viande et à la faire ensuite baisser, et ce à une vitesse d'au moins 0,1 °C par seconde dans le domaine de température situé au-dessus de 40 °C, grâce à quoi les petits morceaux de viande sont assemblés et liés les uns aux autres par lesdites protéines coagulées, mais conservent dans une grande mesure les propriétés de la viande crue non traitée parce que les protéines présentes au sein des petits morceaux de viande ne sont pratiquement pas dénaturées.

5. Procédé conforme à la revendication 4, **caractérisé en ce que** l'on effectue ladite dénaturation par traitement thermique à une température située entre 40 et 95 °C, de préférence entre 45 et 75 °C, et mieux encore entre 50 et 65 °C.

6. Procédé conforme à la revendication 4 ou 5, **caractérisé en ce que**, au cours du traitement thermique provoquant ladite dénaturation, on fait monter et baisser ladite température à une vitesse de 0,1 à 50 °C par seconde, dans l'intervalle de température où l'on opère.

7. Procédé conforme à l'une des revendications précédentes, **caractérisé en ce qu'**on provoque la formation de protéines solubilisées à la surface des petits morceaux de viande en traitant ceux-ci, par pétrissage et/ou culbutage, avec un ou plusieurs sels appropriés.

8. Procédé conforme à la revendication 7, **caractérisé en ce que** le traitement des petits morceaux de viande par un ou plusieurs sels appropriés a lieu dans un tambour rotatif.

9. Procédé conforme à l'une des revendications précédentes, **caractérisé en ce qu'**on provoque, au moins en partie, la formation de protéines solubilisées en préparant, à partir de viande hachée finement, d'eau et d'un ou de plusieurs sels appropriés, un hachis qu'on mélange avec les petits morceaux de viande.

10. Procédé conforme à la revendication 9, **caractérisé en ce qu'**on sale un peu les petits morceaux de viande, avant d'y ajouter le hachis.

11. Procédé conforme à la revendication 9, **caractérisé en ce qu'**on pétrit les morceaux de viande relativement petits, avec un ou plusieurs sels appropriés, avant d'y ajouter le hachis.

12. Procédé conforme à l'une des revendications précédentes, **caractérisé en ce que** c'est du sel commun que l'on emploie pour solubiliser les protéines.

13. Procédé conforme à l'une des revendications 5 à 12, **caractérisé en ce que**, après le traitement thermique, on fait refroidir la viande jusqu'à ce que sa température soit inférieure à environ 45 °C.

14. Procédé conforme à l'une des revendications précédentes, **caractérisé en ce qu'**on maintient la viande dans un moule ou un récipient, au moins pendant la dénaturation sélective et la coagulation des protéines.

15. Procédé conforme à la revendication 14, **caractérisé en ce qu'**on maintient la viande sous pression dans un moule ou un récipient.

16. Procédé conforme à la revendication 14 ou 15, **caractérisé en ce qu'**on dispose la viande dans une poche à vide qu'on place dans le moule ou le récipient.

17. Procédé conforme à l'une des revendications précédentes, **caractérisé en ce qu'**on emploie de la viande émincée comme produit de départ et en ce qu'on mène le processus de dénaturation et de coagulation tout en maintenant sous légère pression la viande étalée en couche mince, pour obtenir un produit dont la texture est celle de la viande rouge émincée.
